# EUROPEAN PATENT SPECIFICATION

(11) **EP 3 363 514 B1**
(45) Date of publication and mention of the grant of the patent: **15.07.2020**
(21) Application number: 17156560.9
(22) Date of filing: 16.02.2017
(51) Int. Cl.: A63H 33/04, G09B 23/18, H05K 1/02

(54) **ELECTRIC CIRCUIT SIMULATION INTELLECTUAL TOY**
INTELLEKTUELLES SPIELZEUG ZUR STROMKREISSIMULATION
JOUET INTELLECTUEL DE SIMULATION DE CIRCUIT ÉLECTRIQUE

(43) Date of publication of application: 22.08.2018
(73) Proprietor: Fu, Hung-Peng, Central Hong Kong (HK)
(72) Inventor: Fu, Hung-Peng, Central Hong Kong (HK)
(74) Representative: Cabinet Chaillot

(56) References cited:
- WO-A1-2013/081367
- CN-U- 201 780 708
- FR-A- 1 395 756
- KR-Y1- 200 306 980

## Description

### FIELD OF THE INVENTION

The present invention relates to the field of educational learning accessory devices, particularly to an electric circuit simulation intellectual toy that allows children to assemble programmable electric power modules with load components freely, so that the children can understand the principle of electricity and the application of circuits during the game, and the invention achieves the effects of edutainment.

### BACKGROUND OF THE INVENTION

### 1. Description of the Related Art

In the current economic situation, Taiwan still plays the role of a dominant party in the development of electronic and electrical industry, and personalities and characteristics of R&D engineers give us an intuitive association with the reasonable, logical, thoughtful and accurate impression, so that parents want to cultivate their children with related interests in electrical and electronic aspects in hope of helping their children for future professional choices and skills. On the other hand, the learning of scientific knowledge focuses on the children's curiosity about an event and guides the children to observe and think about the cause of the occurrence of the event, so as to cultivate their independent reasoning analysis and argumentative scientific spirit. In other words, stimulating children's independent thinking is more important than imparting knowledge. Therefore, there are various different types of related teaching materials such as the traditional circuit board that allows us to design our own circuits. However, such circuit board requires children to solder the circuit material by a soldering iron, and the fine details of the electronic materials are not easy to arouse interest and also incur a very high risk of fire. Obviously, the traditional circuit board is not suitable for younger children. On the other hand, a universal circuit board commonly known as bread board which does not require the soldering iron for soldering and is safer, but such circuit board also has fine detailed electronic components and electric wires and is boring, and the experimental circuit requires the computation of running direction of the electric wires hidden in the bread board before the electronic components or electric wires are installed, so that such circuit board is also not suitable for younger children and is difficult to arouse interest.

In view of the aforementioned drawbacks, the inventor of the present invention has filed and received a patent (R.O.C. Pat. No. M399456) with regard to electronic building blocks in 2005, and disclosed a teaching aid in electricity utilization. Such patented invention adopts the design of connecting male and female buckles and comprises at least one conductive terminal, at least one conductive component, at least one terminal component and at least one power device, so that younger children can access the components easily. In addition, a buckle portion and a buckle hole are electrically coupled to each other, so that a younger child has no difficult to implement different applications of the circuits and children can feel or even understand the principle of applying electronic circuits. Since the market of electronic building blocks has high acceptance and sales, therefore the inventor of the present invention further expanded the functionality of the aforementioned electronic building block and developed an electric circuit simulation intellectual toy which allows children to operate and control the electronic components and the connection of the whole circuit, and the design of the invention gives a higher level of awareness and accomplishment.

### 2. Summary of the Invention

Therefore, it is a primary objective of the present invention to overcome the drawbacks of the prior art by providing an electric circuit simulation intellectual toy, and the toy uses a flexibly programmable electric power supply to drive and operate an electronic building block made by electrical circuits and further guide children to understand the relevance and logic between a programming language and the operation of a circuit.

To achieve the aforementioned and other objectives, the present invention provides an electric circuit simulation intellectual toy which is an electronic building block comprising a carrier, a plurality of conductive components and a plurality of terminal components, wherein the carrier is provided for accommodating the conductive components and the terminal components, and the conductive components and the terminal components have at least one conductive terminal, and an end of the conductive terminal is a fastening nail and the other end of the conductive terminal is a fastening hole, and the fastening nail and the fastening hole are electrically coupled to each other and used for connecting the conductive components and the terminal components in different combinations to form different electrical circuits, characterized in that the electric circuit simulation intellectual toy comprises a substrate and an electric power supply formed by a box, and the box is disposed on the upper side of the substrate and contains a processor and a USB jack disposed on a side edge of the box, and the plural types of fastening nails are arranged on two side edges of the upper side of the substrate respectively, and the plural types of fastening holes are arranged on two side edges of the upper side of the substrate respectively, and the processor is electrically coupled to the fastening nails and the fastening holes, and the processor is electrically coupled to an external electronic device through the USB jack, and an Arduino kit of the external electronic device is provided for editing an operating program and writing and storing the operating program in the processor, and each of the conductive components or each of the terminal components is coupled to each respective fastening nail and reach respective fastening hole, and while an operating power of the electrical circuit is obtained from the processor, each of the terminal components is operated according to the procedure of the operating program.

In addition, preferably, the intellectual toy further comprises a power jack disposed on a side edge of the box for plugging an external power supply device, and plurality of slots formed on an upper side of the box for plugging at least one external conductive wire and electrically coupling an input pin or an output pin of the processor.

Wherein, advantageously, the carrier has a configuration board with a plurality of positioning columns, and the electric power supply, each of the conductive components and each of the terminal components have at least one positioning hole. Preferably, the terminal component is at least one selected from a buzzer, a light emitting diode, a resistor, an optical coupler, a switch, a clock, a high-frequency radio and an ammeter, and each of the terminal components has the two conductive terminals which are positive and negative terminals of the terminal component respectively. Preferably, each of the conductive components is in form of an electric wire or a conductive strip, and the conductive terminals are disposed at both ends of the conductive component respectively, and the conductive strip is in form of the conductive component and has at least one conductive protrusion disposed on a side of the conductive component and fastened to the fastening hole to achieve the effect of an electrical connection.

In summation of the description above, the present invention allows children to edit the operating program by a very simple and easy Arduino kit directly on the electronic device, and a USB cable and the USB jack are provided for inputting and storing the operating program into the processor, and then the operating mode and time of the terminal components can be controlled, so that children can start with an easily approachable programming language and gradually understand the control and fun of using the program code to control the terminal components, so as to arouse the children's interest and curiosity in electronic and electrical fields.

### BRIEF DESCRIPTION OF THE DRAWINGS

FIG. 1 is a partial exploded view of an electric power supply in accordance with a preferred embodiment of the present invention;
FIG. 2 is a first perspective view of an electric power supply in accordance with a preferred embodiment of the present invention;
FIG. 3 is a second perspective view of an electric power supply in accordance with a preferred embodiment of the present invention; and
FIG. 4 is a schematic view of a preferred embodiment of the present invention.

### DESCRIPTION OF THE PREFERRED EMBODIMENTS

The above and other objects, features and advantages of this disclosure will become apparent from the following detailed description taken with the accompanying drawings.

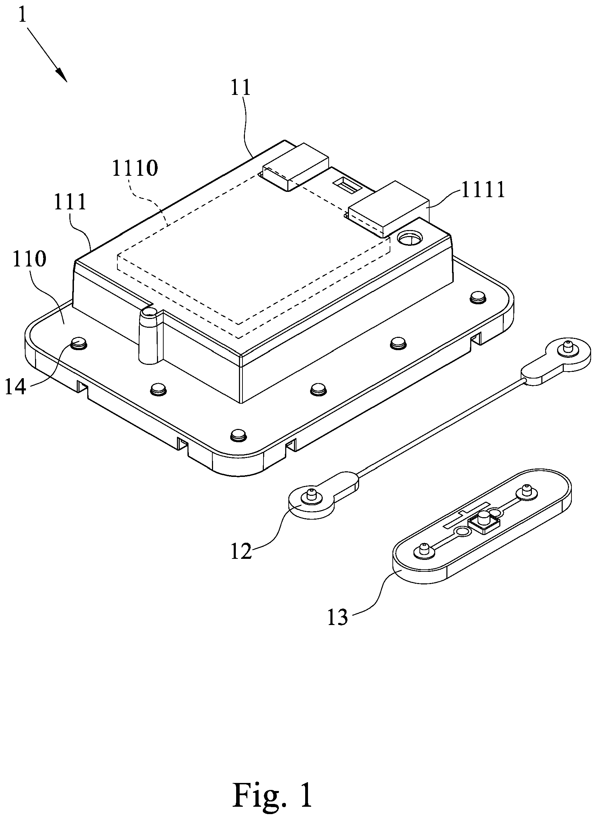

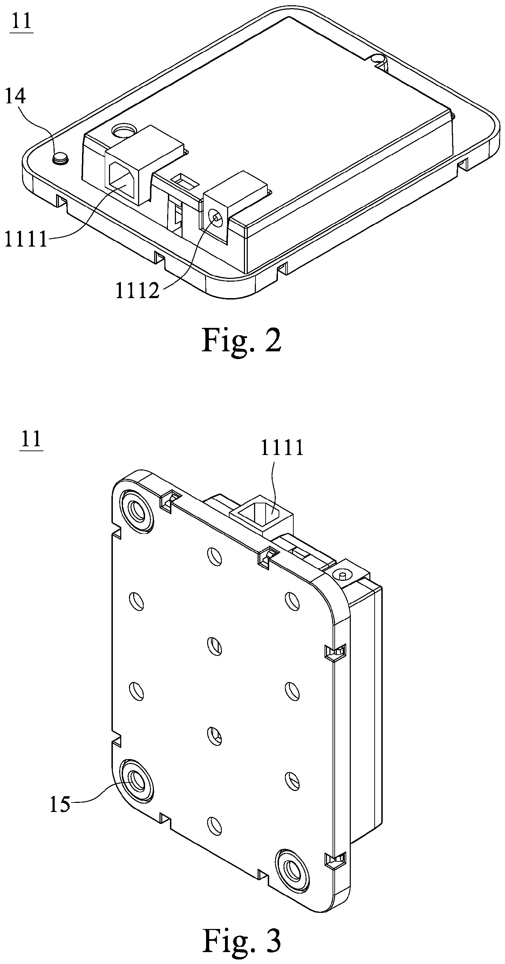

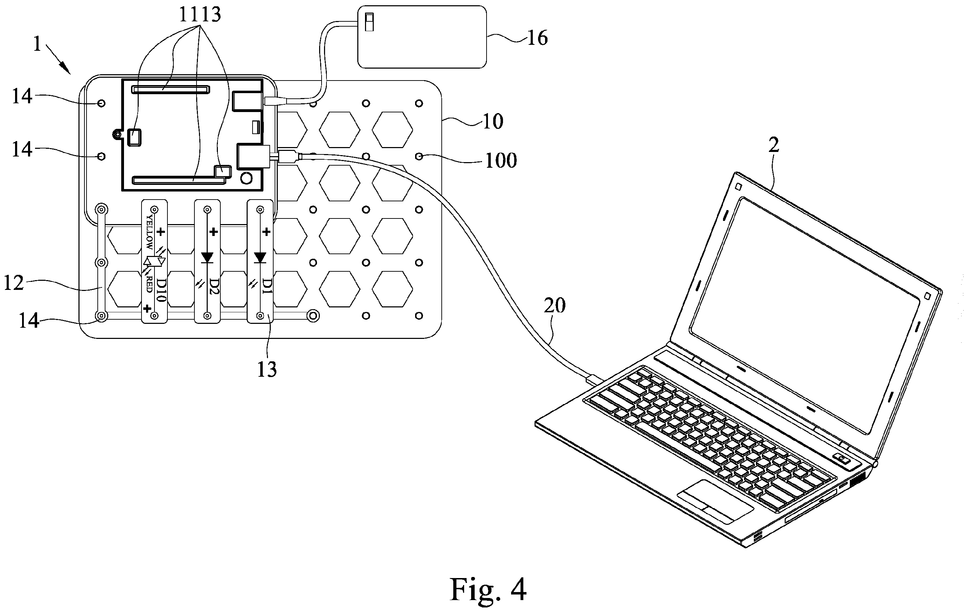

With reference to FIGS. 1 to 4 for a partial exploded view and different perspective views of an electric power supply in accordance with a preferred embodiment of the present invention respectively, an electric circuit simulation intellectual toy 1 is an electronic building block and has a carrier 10, an electric power supply 11, a plurality of conductive components 12 and a plurality of terminal components 13. The carrier 10 may be a configuration board having a plurality of positioning columns 100 protruded from a surface of the configuration board and the carrier 10 is provided for accommodating the electric power supply 11, the conductive components 12, and the terminal components 13. The electric power supply 11 comprises a substrate 110 and a box 111, and the box 111 is disposed at the upper side of the substrate 110 and contains a processor 110 installed therein, and a USB jack 1111 disposed on a side edge of the box 111, and the USB jack 1111 is electrically coupled to the processor 1110. Plural types of fastening nails 14 are arranged on two side edges of the upper side of the substrate 110 respectively, and plural fastening holes 15 formed on two side edges of the lower side of the substrate 110, and the fastening nails 14 and the fastening holes 15 are electrically coupled to the processor 1110, and the quantity of the fastening nails 14 and the quantity of the fastening holes 15 may be unequal, such as six fastening nails 14 and three fastening holes 15. In addition, the electric power supply 11 may adopt the architecture of a built-in battery for supplying electric power directly, or a power jack 1112 is formed on a side edge of the box 111 and provided for plugging an external power supply device 16, so that the power supply device 16 can supply electric power.

Each of the conductive components 12 is in the form of an electric wire or a conductive strip and both ends of the conductive component 12 has the corresponding fastening nail 14 and fastening hole 15 respectively. Now, the corresponding fastening nail 14 and fastening hole 15 constitute a conductive terminal, and the fastening nail 14 and the fastening hole 15 are electrically coupled to each other. In addition, the conductive component 12 in form of the conductive strip may have different quantities of fastening holes 15 and fastening nails 14 on a side, so that a single conductive component 12 may be fastened to the electric power supply 11 and the plural terminal components 13 to achieve the effect of an electrical connection. The terminal component 13 is at least one selected from a buzzer, a light emitting diode, a resistor, an optical coupler, a switch, a clock, a high-frequency radio and an ammeter at least one, and both ends of the terminal component 13 have the conductive terminals which are positive and negative terminals of the terminal component 13 respectively. In addition, each of the conductive components 12 and each of the terminal components 13 have at least one positioning hole (not shown in the figure) configured to be corresponsive to the carrier 10 and provided for embedding the positioning column 100 and fixing the positioning column 100 onto the carrier 10.

The children may form an electric circuit on the carrier 10 or any plane by connecting the fastening nails 14 and the fastening holes 15 of the conductive components 12 and the terminal components 13 through the electric power supply 11, so that the electric power supply 11 supplies an operating power to the conductive components 12 and the terminal components 13. The children may download and install an Arduino kit to an external electronic device 2 such as a computer or a flat PC and refer to the operating manual of the intellectual toy or edit an operating program, and then uses a USB cable 20 to electrically connect the external electronic device to the processor 110, and the USB jack 111 is provided for sending and writing the operating program into the processor 110, so that each of the terminal components 13 can be operated according to the procedure of the operating program, and the children can learn the operating sequence of the electric circuit and the purpose of controlling the operating program of each of the terminal components 13.

It is noteworthy that before the children edit the operating program and write the operating program into the processor 1110 again, the operating program is always stored in the processor 1110. The upper side of the box 111 may be a detachable cover, or the upper side of the box 111 has a plurality of slots 1113 to let children plug at least one conductive wire to electrically connect an input pin or an output pin of the processor 1110 to allow children to access data directly and use the electric circuit simulation intellectual toy 1.

## Claims

1. An electric circuit simulation intellectual toy (1), being an electronic building block and having a carrier (10), a plurality of conductive components (12) and a plurality of terminal components (13), and the carrier (10) being provided for accommodating the conductive components (12) and the terminal components (13), and the conductive components (12) and the terminal components (13) having at least one conductive terminal, and an end of the conductive terminal being a fastening nail (14), and another end of the conductive terminal being a fastening hole (15), and the fastening nail (14) and the fastening hole (15) being electrically coupled to each other and provided for combining the conductive components (12) and the terminal components (13) by buckling to form an electrical circuit, **characterized in that** the electric circuit simulation intellectual toy (1) comprises a substrate (110) and an electric power supply (11) formed by a box, and the box is disposed on an upper side of the substrate (110) and contains a processor (1110) and a USB jack (1111) is disposed on a side edge of the box, and a plurality of fastening nails (14) is arranged on two side edges of the upper side of the substrate (110), and a plurality of fastening holes (15) is arranged on a lower side of the substrate (110), and the processor (1110) is electrically coupled to the USB jack (1111), the plurality of fastening nails (14), and the plurality of fastening holes (15), and the processor (1110) being configured to be electrically coupled to an external electronic device (2) through the USB jack (1111), the external electronic device (2) being configured to edit an operating program and write and store the operating program into the processor (1110), and each of the conductive components (12) or each of the terminal components (13) is fastened to each respective fastening nail (14) and each respective fastening hole (15), and while an operating power of the electrical circuit is being obtained from the processor (1110), each of the terminal components (13) is operated according to a procedure of the operating program.

2. The electric circuit simulation intellectual toy (1) according to claim 1, wherein the box has a power jack (1112) disposed on a side edge of the box and provided for plugging an external power supply device (16).

3. The electric circuit simulation intellectual toy (1) according to claim 2, wherein the box has a plurality of slots (1113) formed on an upper side of the box for plugging at least one external conductive wire and electrically coupling an input pin or an output pin of the processor (1110).

4. The electric circuit simulation intellectual toy (1) according to claim 3, wherein the carrier (10) has a configuration board with a plurality of positioning columns (100) protruded from a surface of the carrier (10), and the electric power supply (11), each of the conductive components (12) and each of the terminal components (13) have at least one positioning hole.

5. The electric circuit simulation intellectual toy (1) according to claim 4, wherein the terminal component (13) is one selected from a group consisting of a buzzer, a light emitting diode, a resistor, an optical coupler, a switch, a clock, a high-frequency radio and an ammeter.

6. The electric circuit simulation intellectual toy (1) according to claim 5, wherein each of the terminal components (13) has the two conductive terminals (12) which are positive and negative electrodes of the terminal component (13) respectively.

7. The electric circuit simulation intellectual toy (1) according to claim 6, wherein each of the conductive components (12) is in form of an electric wire or a conductive strip, and both ends of each conductive component (12) have the conductive terminals respectively.

8. The electric circuit simulation intellectual toy (1) according to claim 7, wherein the conductive component (12) in form of the conductive strip further has at least one conductive protrusion disposed on a side of the conductive strip and latched with the fastening hole (15) to achieve the effect of an electrical connection.

## Patentansprüche

1. Lernspielzeug zur Simulation einer elektrischen Schaltung (1), das eine elektronische Baueinheit ist und einen Träger (10), mehrere leitfähige Bauteile (12) und mehrere Anschlussklemmenbauteile (13) aufweist, und wobei der Träger (10) zum Aufnehmen der leitfähigen Bauteile (12) und der Anschlussklemmenbauteile (13) bereitgestellt ist und die leitfähigen Bauteile (12) und die Anschlussklemmenbauteile (13) mindestens eine leitfähige Anschlussklemme aufweisen und ein Ende der leitfähigen Anschlussklemme ein Befestigungsnagel (14) ist und ein anderes Ende der leitfähigen Anschlussklemme ein Befestigungsloch (15) ist und der Befestigungsnagel (14) und das Befestigungsloch (15) elektrisch miteinander gekoppelt sind und zum Kombinieren der leitfähigen Bauteile (12) und der Anschlussklemmenbauteile (13) durch Krümmen, um eine elektrische Schaltung zu bilden, bereitgestellt sind, **dadurch gekennzeichnet, dass** das Lernspielzeug zur Simulation einer elektrischen Schaltung (1) ein Substrat (110) und eine elektrische Energieversorgung (11), die von einem Kasten gebildet wird, umfasst und der Kasten an einer Oberseite des Substrates (110) angeordnet ist und einen Prozessor (1110) enthält und eine USB-Buchse (1111) an einer Seitenkante des Kastens angeordnet ist und mehrere Befestigungsnägel (14) an zwei Seitenkanten der Oberseite des Substrats (110) eingerichtet sind und mehrere Befestigungslöcher (15) an einer Unterseite des Substrats (110) eingerichtet sind und der Prozessor (1110) elektrisch mit der USB-Buchse (1111), den mehreren Befestigungsnägeln (14) und den mehreren Befestigungslöchern (15) gekoppelt ist und der Prozessor (1110) dafür gestaltet ist, über die USB-Buchse (1111) elektrisch mit einem externen elektronischen Gerät (2) gekoppelt zu sein, wobei das externe elektronische Gerät (2) dazu gestaltet ist, ein Betriebsprogramm zu bearbeiten und das Betriebsprogramm in den Prozessor (1110) zu schreiben und zu speichern, und jedes der leitfähigen Bauteile (12) oder jedes der Anschlussklemmenbauteile (13) entsprechend an jedem Befestigungsnagel (14) und entsprechend an jedem Befestigungsloch (15) befestigt ist und während eine Betriebsenergie der elektrischen Schaltung von dem Prozessor (1110) bezogen wird, jedes der Anschlussklemmenbauteile (13) gemäß einem Prozedere des Betriebsprogramms betrieben wird.

2. Lernspielzeug zur Simulation einer elektrischen Schaltung (1) nach Anspruch 1, wobei der Kasten eine Energiebuchse (1112) aufweist, die an einer Seitenkante des Kastens angeordnet und zum Anstecken eines externen Energieversorgungsgerätes (16) bereitgestellt ist.

3. Lernspielzeug zur Simulation einer elektrischen Schaltung (1) nach Anspruch 2, wobei der Kasten mehrere Steckplätze (1113) aufweist, die an einer Oberseite des Kastens gebildet sind, zum Anstecken mindestens eines externen leitfähigen Kabels und elektrischen Koppeln eines Eingangs-Pins oder eines Ausgangs-Pins des Prozessors (1110).

4. Lernspielzeug zur Simulation einer elektrischen Schaltung (1) nach Anspruch 3, wobei der Träger (10) eine Konfigurationsplatine mit mehreren Positionierungsspalten (100), die von einer Oberfläche des Trägers (10) hervorstehen, und die elektrische Energieversorgung (11) aufweist, wobei jedes der leitfähigen Bauteile (12) und jedes der Anschlussklemmenbauteile (13) mindestens ein Positionierungsloch aufweisen.

5. Lernspielzeug zur Simulation einer elektrischen Schaltung (1) nach Anspruch 4, wobei das Anschlussklemmenbauteil (13) eines ist, das aus der Gruppe ausgewählt ist, die aus einem Summer, einer Leuchtdiode, einem Widerstand, einem optischen Koppler, einem Schalter, einem Taktgeber, einem Hochfrequenzfunkgerät und einem Amperemeter besteht.

6. Lernspielzeug zur Simulation einer elektrischen Schaltung (1) nach Anspruch 5, wobei jedes der Anschlussklemmenbauteile (13) zwei leitfähige Anschlussklemmen (12) aufweist, die positive beziehungsweise negative Elektroden des Anschlussklemmenbauteils (13) sind.

7. Lernspielzeug zur Simulation einer elektrischen Schaltung (1) nach Anspruch 6, wobei jedes der leitfähigen Bauteile (12) in Form eines elektrischen Kabels oder eines leitfähigen Streifens vorliegt und beide Enden jedes leitfähigen Bauteils (12) die entsprechenden leitfähigen Anschlussklemmen aufweisen.

8. Lernspielzeug zur Simulation einer elektrischen Schaltung (1) nach Anspruch 7, wobei das leitfähige Bauteil (12) in Form des leitfähigen Streifens ferner mindestens eine leitfähige Vorwölbung aufweist, die an einer Seite des leitfähigen Streifens angeordnet und mit dem Befestigungsloch (15) verrastet ist, um den Effekt einer elektrischen Verbindung zu erreichen.

## Revendications

1. Jouet intellectuel de simulation de circuit électrique (1), étant un bloc de construction électronique et ayant un support (10), une pluralité de composants conducteurs (12) et une pluralité de composants de borne (13), et le support (10) étant prévu pour recevoir les composants conducteurs (12) et les composants de borne (13), et les composants conducteurs (12) et les composants de borne (13) ayant au moins une borne conductrice, et une extrémité de la borne conductrice étant un ergot de fixation (14), et une autre extrémité de la borne conductrice étant un trou de fixation (15), et l'ergot de fixation (14) et le trou de fixation (15) étant couplés électriquement l'un à l'autre et prévus pour combiner les composants conducteurs (12) et les composants de borne (13) par flambage pour former un circuit électrique, **caractérisé par le fait que** le jouet intellectuel de simulation de circuit électrique (1) comprend un substrat (110) et une alimentation électrique (11) formée par une boîte, et la boîte est disposée sur un côté supérieur du substrat (110) et contient un processeur (1110) et une prise USB (1111) est disposée sur un bord latéral de la boîte, et une pluralité d'ergots de fixation (14) est agencée sur deux bords latéraux du côté supérieur du substrat (110), et une pluralité de trous de fixation (15) sont agencés sur un côté inférieur du substrat (110), et le processeur (1110) est couplé électriquement à la prise USB (1111), à la pluralité d'ergots de fixation (14), et à la pluralité de trous de fixation (15), et le processeur (1110) étant configuré pour être couplé électriquement à un dispositif électronique externe (2) par l'intermédiaire de la prise USB (1111), le dispositif électronique externe (2) étant configuré pour éditer un programme d'exploitation et écrire et stocker le programme d'exploitation dans le processeur (1110), et chacun des composants conducteurs (12) ou chacun des composants de borne (13) est fixé à chaque ergot de fixation respectif (14) et chaque trou de fixation respectif (15), et tandis qu'une puissance de fonctionnement du circuit électrique est obtenue du processeur (1110), chacun des composants de borne (13) est actionné selon une procédure du programme d'exploitation.

2. Jouet intellectuel de simulation de circuit électrique (1) selon la revendication 1, dans lequel la boîte a une prise d'alimentation (1112) disposée sur un bord latéral de la boîte et prévue pour brancher un dispositif d'alimentation externe (16).

3. Jouet intellectuel de simulation de circuit électrique (1) selon la revendication 2, dans lequel la boîte a une pluralité de fentes (1113) formées sur un côté supérieur de la boîte pour brancher au moins un fil conducteur externe et coupler électriquement une broche d'entrée ou une broche de sortie du processeur (1110).

4. Jouet intellectuel de simulation de circuit électrique (1) selon la revendication 3, dans lequel le support (10) a une carte de configuration avec une pluralité de colonnes de positionnement (100) faisant saillie d'une surface du support (10), et de l'alimentation électrique (11), chacun des composants conducteurs (12) et chacun des composants de borne (13) ont au moins un trou de positionnement.

5. Jouet intellectuel de simulation de circuit électrique (1) selon la revendication 4, dans lequel le composant de borne (13) est l'un choisi parmi un groupe composé d'un vibreur sonore, d'une diode électroluminescente, d'une résistance, d'un coupleur optique, d'un commutateur, d'une horloge, d'une radio haute fréquence et d'un ampèremètre.

6. Jouet intellectuel de simulation de circuit électrique (1) selon la revendication 5, dans lequel chacun des composants de borne (13) a les deux bornes conductrices (12) qui sont respectivement les électrodes positive et négative du composant de borne (13).

7. Jouet intellectuel de simulation de circuit électrique (1) selon la revendication 6, dans lequel chacun des composants conducteurs (12) se présente sous la forme d'un fil électrique ou d'une bande conductrice, et les deux extrémités de chaque composant conducteur (12) ont respectivement les bornes conductrices.

8. Jouet intellectuel de simulation de circuit électrique (1) selon la revendication 7, dans lequel le composant conducteur (12), sous la forme de la bande conductrice, a en outre au moins une saillie conductrice disposée sur un côté de la bande conductrice et verrouillée avec le trou de fixation (15) pour obtenir l'effet d'une connexion électrique.
